# EUROPEAN PATENT SPECIFICATION

(11) **EP 3 675 080 B1**
(45) Date of publication and mention of the grant of the patent: **19.07.2023**
(21) Application number: 18860259.3
(22) Date of filing: 27.09.2018
(51) Int. Cl.: A61H 1/00, A63B 71/06, G09B 5/00, G09B 19/00, G09B 7/00, G09B 1/36, G09B 1/38

(54) **PEGBOARD TRAINING METHOD AND PROGRAM THEREFOR**
VERFAHREN FÜR LOCHWANDTRAINING UND PROGRAMM DAFÜR
PROCÉDÉ D'ENTRAÎNEMENT DE JEU SUR PLATEAU À CHEVILLES ET PROGRAMME ASSOCIÉ

(30) Priority: 28.09.2017 KR 20170126544
(43) Date of publication of application: 01.07.2020
(73) Proprietor: NEOFECT Co., Ltd., Seongnam-si, Gyeonggi-do 13449 (KR)
(72) Inventor: YANG, Dong Seok, Uijeongbu-si Gyeonggi-do 11802 (KR)
(74) Representative: Manitz Finsterwald Patent- und Rechtsanwaltspartnerschaft mbB
(86) International application number: PCT/KR2018/011460
(87) International publication number: WO 2019/066510

(56) References cited:
- KR-A- 20140 019 566
- KR-B1- 100 806 024
- KR-B1- 100 832 810
- KR-B1- 101 338 043
- KR-B1- 101 782 341

## Description

### TECHNICAL FIELD

The present disclosure relates to a pegboard training method and a program therefor, and more particularly, to a method and a program for training a stroke patient using a pegboard during rehabilitation training.

### BACKGROUND

In general, a brain-damaged patient, e.g., a stroke patient, requires a tool for gradually recovering the basic perception and exercise functions to return to a normal life.

To this end, conventionally, the patient gets a rehabilitation treatment by using a simple tool, such as a pegboard, and the pegboard is typically designed for the patient to insert multiple blocks into a fixed board to finish a specific pattern or shape.

Meanwhile, in order to provide the most effective treatment method to the patient based on accumulated data while performing a rehabilitation treatment, records and analyses of a process of performing training with a rehabilitation treatment tool, such as a pegboard, and the result of training process are thoroughly required.

KR 100 806 024 B1 discloses a pegboard training method comprising: receiving a game execution request from a user by a pegboard training device; providing the user with a game for which the execution request has been received by the pegboard training device; recognizing the user's insertion of a peg for the game by the pegboard training device; and guiding the user to an evaluation of a game result based on the insertion of the peg recognized by the pegboard training device after the game is over, wherein the pegboard training device is configured to provide the user with training by using insertion pegs onto a board including a plurality of holes, and the game is executed by at least one of inserting a peg into at least one hole presented by the pegboard training device on the pegboard, inserting a peg by the user into a hole, which has not been presented by the pegboard training device, on the pegboard at the user's discretion, and removing a peg inserted in a hole by the user after the pegboard training device guides the user to remove the peg.

### PROBLEMS TO BE SOLVED BY THE INVENTION

Conventional pegboards are limited in configuration and do not sufficiently consider rehabilitation training methods for brain-damaged patients and thus are not sufficient in developing various senses of the patients. However, problems to be solved by the present invention are not limited to this problem. Although not described herein, other problems to be solved by the present invention can be clearly understood by a person with ordinary skill in the art from the following description.

### MEANS FOR SOLVING THE PROBLEMS

The above-described problems are solved by a pegboard training method in accordance with claim 1.

Accordingly, the present disclosure provides a training method using a pegboard for a neglected side of a neglect patient, in which the senses are ignored, among brain-damaged stroke patients.

Further, the present disclosure provides a training method using a pegboard for a cognitive disorder patient and a patient whose range of motion is limited.

According to an aspect of the present disclosure, a pegboard training method, includes receiving a game execution request from a user by a pegboard training device; providing the user with a game for which the execution request has been received by the pegboard training device; recognizing the user's insertion of a peg for the game by the pegboard training device; and guiding the user to an evaluation of a game result based on the insertion of the peg recognized by the pegboard training device after the game is over. The pegboard training device is configured to provide the user with training by using insertion pegs onto a board including a plurality of holes, and the game is executed by at least one of inserting a peg into at least one hole presented by the pegboard training device on the pegboard, inserting a peg by the user into a hole, which has not been presented by the pegboard training device, on the pegboard at the user's discretion, and removing a peg inserted in a hole by the user after the pegboard training device guides the user to remove the peg.

The user that executes the game is a patient with a defect on one side of the visual field. In the providing the user with the game, the pegboard training device requests to insert a plurality of pegs into a plurality of holes at specific positions in the pegboard training device in a direction of from left to right or from right to left.

The specific positions are positions where the user is guided to insert pegs sequentially from a visible point in the visual field of the user to an invisible point in the opposite direction to the visible point.

The specific positions include a plurality of specific positions where pegs need to be inserted. The providing the user with the game includes presenting all of the plurality of specific positions by the pegboard training device; requesting, by the pegboard training device, the user to insert pegs sequentially from one of the plurality of specific positions that is in an invisible region in the visual field of the user and is the farthest from a visible region in the visual field of the user toward the visible region in the visual field of the user; and if a position where the insertion of a peg has been recognized by the pegboard device is closer to the visible region in the visual field of the user than to a position where the insertion of a peg has been requested, guiding the user that there is a position where a peg needs to be inserted at a position in the invisible region.

In the providing the user with the game, the pegboard training device presents a plurality of points to the user, and the pegboard training device requests the user to inert pegs into a plurality of holes on a route connecting the plurality of points.

In the guiding the user to the evaluation of the game result, guiding the user the evaluation based on at least one of the presence or absence of the shortest distance route, the number of pegs inserted, the level of difficulty and the game execution time.

The guiding the user to the evaluation of the game result includes, if there are more than one route connecting the plurality of points formed by the user, requesting the user to correct the route.

In the providing the user with the game, a first point that is moving and a second point that is fixed are presented, and when the first point moves to reach the second position, the game is over, the first point moves according to a predetermined rule, and if a movement route of the first point is blocked, the first point is rerouted to a predetermined direction and continues to move, and when the movement route of the first point is blocked, the first point reaches the end of the pegboard device or a point where a peg has been inserted.

In the guiding the user to the evaluation of the game result, guiding the user the evaluation based on at least one of the game execution time, the success or failure in the game, the number of pegs used and the number of holes along which the first point moves.

In the providing the user with the game, a specific shape is provided and the user is requested to insert pegs along the specific shape.

The specific shape is at least one of the shape of a pattern formed directly by the user by selecting a plurality of holes and a shape selected by the user from among predetermined shapes.

The providing the user with the game includes providing the user with a game of selecting and inserting the pegs, and the pegs include at least one of pegs which include magnets having different intensities and are color-coded for each magnetic intensity or pegs which include bipolar magnets and whose both ends are differentiated.

The providing the user with the game further includes providing a peg insertion point in order to insert a peg at a distance sufficient for a range of motion (ROM) of the user to be extended in consideration of the ROM of the user.

The pegboard training method, further includes providing a guide by the pegboard training device by recognizing whether a hand gripping a peg has been supposed to grip the peg. Whether a hand gripping a peg has been supposed to grip the peg is recognized based on mutual recognition between a finger wearable device worn on the user's finger and the peg.

The pegboard training method, further includes initial setting in a customized manner by the pegboard training device before the providing the user with the game. The initial setting is performed by calculating at least one of an approach range or an approach direction of the user's finger to a plurality of holes on the board.

The pegboard training method, further includes presenting, on an external display, the proceedings of the game performed on the board identically as shown on the board. The external display is combined as one body with the pegboard training device or provided separately from the pegboard training device and is separable from each other.

The pegboard training device includes a bidirectional manipulation unit and a display unit and provides at least one of operations for pegboard training, setting, a guide to a game, and an evaluation of a game result on the display unit, the display unit includes a screen whose direction is switched to two directions, and, the direction of the screen is switched to a direction of manipulation of the user as manipulated by the user, and the direction of manipulation of the user is recognized according to a direction to which the user uses the bidirectional manipulation unit.

A pegboard training program is stored in a medium for executing any one of method from among the above-mentioned pegboard training method in combination with a computer which is hardware

Details of the present disclosure will be included in the detailed description and the accompanying drawings.

### EFFECTS OF THE INVENTION

According to the present disclosure, rehabilitation training is provided in order for a neglect patient among stroke patients to continuously perform stimulation training to the side of neglecting stimuli and thus gradually recognize stimuli on the side of neglecting stimuli.

Further, according to the present disclosure, cognitive training can be performed through various cognitive training games.

Furthermore, according to the present disclosure, a range of motion can be rehabilitated to a normal range by performing cognitive training and stimulation training of a neglect patient together with training for extending the range of motion to the normal range when the range of motion is not in the normal range.

Moreover, according to the present disclosure, rehabilitation training can be provided in a customized manner through initial setting.

The effects of the present disclosure are not limited to the above-described effects. Although not described herein, other effects of the present disclosure can be clearly understood by a person with ordinary skill in the art from the following description.

### BRIEF DESCRIPTION OF THE DRAWINGS

**FIG.** 1 is a flowchart for explaining a pegboard training method according to an embodiment of the present disclosure.
**FIG. 2** and **FIG.** 3 are diagrams for explaining a game method for training a patient with a visual field defect or a neglect patient.
**FIG. 4** is a diagram for explaining a multipoint connection game method included in cognitive training according to an embodiment of the present disclosure.
**FIG.** 5 is a diagram for explaining a destination reaching game method included in cognitive training according to an embodiment of the present disclosure.

### BEST MODE FOR CARRYING OUT THE INVENTION

The advantages and characteristics of the present disclosure and a method of achieving the advantages and characteristics will be clear by referring to exemplary embodiments described below in detail together with the accompanying drawings. However, the present disclosure is not limited to exemplary embodiment disclosed herein but will be implemented in various forms. The exemplary embodiments are provided by way of example only so that a person with ordinary skill in the art can fully understand the disclosures of the present disclosure and the scope of the present disclosure. Therefore, the present disclosure will be defined only by the scope of the appended claims.

The terms used herein provided only for illustration of the exemplary embodiments but not intended to limit the present disclosure. As used herein, the singular terms include the plural reference unless the context clearly indicates otherwise. The terms "comprises" and/or "comprising" specify the presence of stated components, but do not preclude the presence or addition of one or more other components., and the term "and/or" includes any and all combinations of one or more of the associated listed items. Throughout the whole specification, the same reference numerals denote the same elements, and the term "and/or" includes any and all combinations of one or more of the associated listed items. Although the terms "first", "second", and the like are used for describing various components, these components are not confined by these terms. These terms are merely used for distinguishing one component from the other components. Therefore, a first component to be mentioned below may be a second component in a technical concept of the present disclosure.

Unless otherwise defined, all terms (including technical and scientific terms) used herein have the same meaning as commonly understood by a person with ordinary skill in the art to which this invention pertains. It will be further understood that terms, such as those defined in commonly used dictionaries, should not be interpreted in an idealized or overly formal sense unless expressly so defined herein.

The spatially-relative terms such as "below", "beneath", "lower", "above", "upper", etc. may be used herein for ease of description to describe the relationship of one component with another component(s) as illustrated in the drawings. It will be understood that the spatially relative terms are intended to encompass different orientations of the component in use or operation, in addition to the orientation depicted in the drawings. For example, if the component in the drawings is turned over, components described as "below" or "beneath" other components would then be oriented "above" the other components. Thus, the exemplary term "below" can encompass both an orientation of above and below. The component may be otherwise oriented in another direction and the spatially-relative terms used herein interpreted accordingly.

Hereafter, embodiments of the present disclosure will be described in detail with reference to the accompanying drawings.

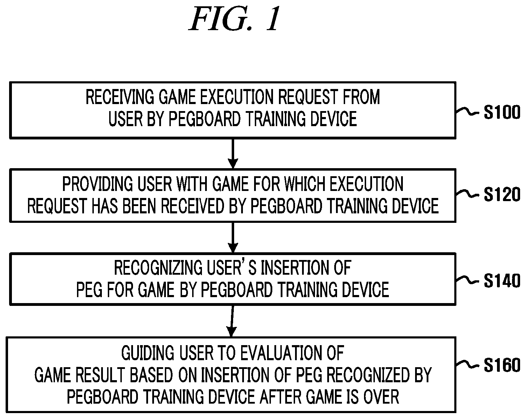

**FIG. 1** is a flowchart for explaining a pegboard training method according to an embodiment of the present disclosure.

Referring to **FIG. 1****,** the pegboard training method according to an embodiment of the present disclosure includes a step of receiving a game execution request from a user by a pegboard training device (S100), a step of providing the user with a game for which the execution request has been received by the pegboard training device (S120), a step of recognizing the user's insertion of a peg for the game by the pegboard training device (S140), and a step of guiding the user to an evaluation of a game result based on the insertion of the peg recognized by the pegboard training device after the game is over (S160).

First, the pegboard training device is configured to provide the user with training including inserting pegs onto a board including a plurality of holes.

In the step of receiving the game execution request from the user by the pegboard training device (S100), the game is executed by inserting a peg into a hole presented by the pegboard training device on the pegboard or inserting pegs while forming a route according to a guide provided by the pegboard training device.

That is, in an embodiment of the present disclosure, the game is a game of inserting a peg into a hole as requested by the pegboard training device, and in another embodiment, the game is a game of inducing the user to insert pegs while forming a route as determined by the user among various possible routes using a plurality of points provided by the pegboard training device.

Specifically, the game according to an embodiment of the present disclosure includes inserting a peg into at least one hole presented by the pegboard training device on the pegboard, *i.e.,* inserting pegs into a predetermined number of holes after the pegboard training device presents the predetermined number of holes.

Further, the game according to another embodiment of the present disclosure includes forming a route by inserting pegs by the user into holes, which have not been presented by the pegboard training device, on the pegboard at the user's discretion, i.e., inserting pegs by the user into holes, which have not been presented by the pegboard training device, at the user's discretion after the pegboard training device presents a plurality of holes.

Furthermore, the game according to yet another embodiment of the present disclosure includes removing a peg inserted in a hole by the user after the pegboard training device guides the user to remove the peg, i.e., removing a peg already inserted in a hole on the pegboard by the user after the pegboard training device guides the user to remove the peg.

According to still another embodiment, the pegboard training device presents a moving point that forms a route, and the game is over when the user inserts a peg on the route of the movable point as expected by the user and the inserted peg meets the moving point.

The level of difficulty can be set depending on the type of each game, and the training mode may be provided differently depending on input information of the user or the user's condition.

The step of providing the user with the game (S120) includes various methods for providing the game according to the above-described embodiments.

One of various purposes of the present disclosure is to provide rehabilitation training for stroke patients. A neglect patient among brain-damaged stroke patients does not show defects in a visual field test but neglects and cannot recognize visual, auditory and tactile stimuli on his/her affected side.

Such a neglect patient needs to continuously perform stimulation training to the side of neglecting stimuli.

Therefore, if the user who executes the game is a patient with a defect on one side of the visual field or a neglect patient among brain-damaged stroke patients, the user is requested to insert a plurality of pegs into a plurality of holes at specific positions in the pegboard training device in a direction of from left to right or from right to left in the step of providing the user with the game (S120).

Here, the direction of from left to right or from right to left may be set in consideration of one side of the patient with a defect on one side of the visual field and a neglected side of the neglect patient.

In an embodiment, the specific positions where the insertion is requested are positions where the patient is guided to insert pegs sequentially from a visible or recognizable point in the visual field of the patient to an invisible or unrecognizable point in the opposite direction to the visible point.

For example, a neglect patient who neglects the right side is requested to insert pegs sequentially from a point on the left to a unrecognizable point on the right.

In another embodiment, the specific positions where the insertion is requested include a plurality of specific positions, and the pegboard training device presents all of the plurality of specific positions and requests the user to insert pegs sequentially from one of the plurality of specific positions that is in an invisible region in the visual field of the user and is the farthest from a visible region in the visual field of the user toward the visible region in the visual field of the user.

If a position where the user has inserted a peg is closer to the visible region in the visual field of the user than to a position where the insertion of a peg has been requested, the user is guided that he/she needs to further insert a peg at a position in the invisible region.

By guiding the user that he/she needs to further insert a peg at a position in the invisible region so as to continuously perform the training, it is possible to provide a rehabilitation training effect for a patient with a visual field defect or a neglect patient to recognize an invisible or unrecognizable region.

If the specific positions are arranged in the same column, it is impossible to set the left or right direction. Therefore, the specific positions are arranged in a diagonal or horizontal direction, but are not arranged in the same column on a plurality of holes based on the user.

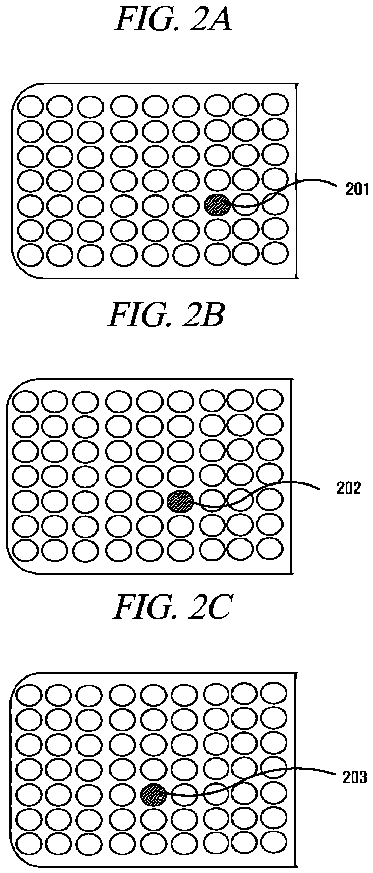

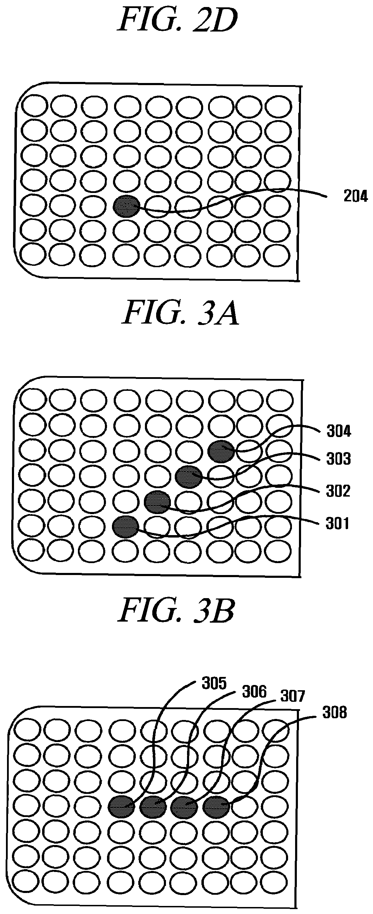

If the user who executes the game is a patient with a defect on one side of the visual field or a neglect patient among brain-damaged stroke patients, a game execution method will be described later in detail with reference to **FIG.** 2 and **FIG. 3****.**

In the step of providing the user with the game (S120) according to another embodiment, the pegboard training device presents a plurality of points to the user and requests the user to insert pegs into a plurality of holes on a route connecting the plurality of points.

There may be various routes connecting the plurality of points, but in the cognitive training, whether or not the user can connect the plurality of points in the shortest distance is checked and the user can be trained to connect the plurality of points in the shortest distance.

If the user is provided with the game of inserting pegs into a plurality of holes on a route connecting a plurality of points (hereinafter, referred to as "shortest distance connection game"), an evaluation is made based on at least one of the presence or absence of the shortest distance route, the number of pegs inserted, the level of difficulty and the game execution time and the user is guided to the result of evaluation in the step of guiding the user to the evaluation of the game result (S160).

The result of evaluation may be stored for each user in the pegboard training device, and if the game is performed several times, the results of evaluation may be compared and provided.

Further, the result of evaluation may not only present the result of game execution but may also be provided to help the medical staff in determining the rehabilitation progress of the user based on the result of evaluation.

The step of guiding the user to the evaluation of the game result (S160) may include guiding the user to the result of evaluation and also include, in the game of inserting pegs into a plurality of holes on a route connecting a plurality of points, guiding the user that there is, if any, a unnecessary route other than a route connecting the plurality of points formed by pegs inserted by the user and requesting the user to correct the route.

If the user corrects the route in response to the request from the pegboard training device, the pegboard training device may again provide the user with the result of evaluation. The recognition of which route is wrong and the removal of pegs can also be applied as the result of cognitive training.

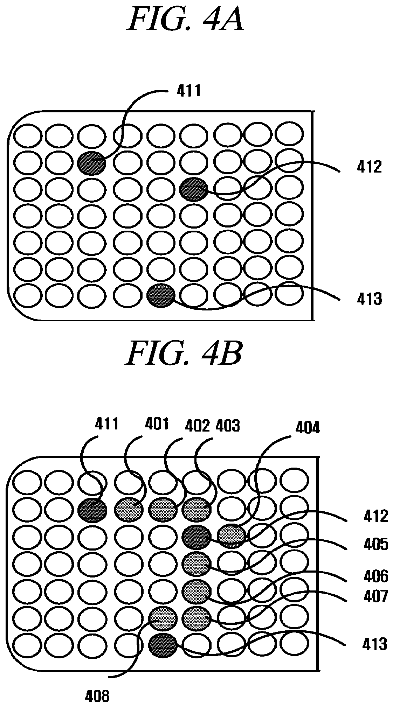

An execution method of the shortest distance connection game will be described in detail later with reference to **FIG. 4****.**

In the step of providing the user with the game (S120) according to another embodiment, the pegboard training device presents a first point that is moving and a second point that is fixed, and when the first point moves to reach the second position, the game is over. The game according to the present embodiment will be hereinafter referred to as "destination reaching game".

The first point moves according to a predetermined rule, and if a movement route of the first point is blocked, the first point is rerouted to a predetermined direction and continues to move.

When the movement route of the first point is blocked, the first point may reach the end of the pegboard device or a point where a peg has been inserted.

Therefore, the user needs to reroute the direction of the first point so that the first point moves to reach the second point. When a peg is inserted into a hole, the direction is rerouted. Accordingly, a peg needs to be inserted at a position where the direction needs to be rerouted.

When a peg is inserted at the most suitable position, the first point can most quickly reach the second point. Therefore, a short time is required, the least number of pegs may be used and the first point moves along the least number of holes.

Accordingly, as for the destination reaching game, in the step of providing the user with the game (S120), an evaluation is made based on at least one of the game execution time, the success or failure in the game, the number of pegs used and the number of holes along which the first point moves and the user is guided to the result of evaluation.

Like the result of evaluation of the shortest distance connection game, the result of evaluation of the destination reaching game may be stored for each user in the pegboard training device, and if the game is performed several times, the results of evaluation may be compared and provided.

Further, the result of evaluation may not only present the result of game execution but may also be provided to help the medical staff in determining the rehabilitation progress of the user based on the result of evaluation.

In the step of providing the user with the game (S120) according to another embodiment, the pegboard training device provides a specific shape and requests the user to insert pegs along the specific shape.

The specific shape includes a predetermined shape in the pegboard training device and also includes the shape of a pattern formed directly by the user.

The predetermined shape may include one shape selected by the user from among predetermined shapes in the pegboard device.

The pattern set directly by the user is formed by receiving the selection of a plurality of holes from the user.

That is, the user directly selects each of a plurality of holes into which respective pegs will be inserted to form the pattern set directly by the user.

For example, the predetermined shape may include a linear shape, a cross shape, a circular shape, a square shape, a diamond shape, a triangular shape, a star shape, a heart shape and the like, but is not limited thereto and may include all shapes using a plurality of holes.

In the step of providing the user with the game (S120) according to another embodiment, the pegboard training device provides the user with a game of selecting and inserting pegs.

If the pegs include magnets having different intensities, the pegs are color-coded for each magnetic intensity. The pegboard training device presents the color of a peg to be inserted into a presented hole.

If the user inserts a peg according to the presentation of the pegboard training device, the pegboard training device can evaluate whether the peg of the color to be inserted has been inserted correctly based on the magnetic intensity recognized by a hole in which the peg has been inserted.

If the pegs include bipolar magnets, both ends of the pegs are differentiated by polarity. The pegboard training device requests the user to turn over and insert a peg having different polarities on either end.

If the user inserts a peg according to the request from the pegboard training device, the pegboard training device can recognize the polarity of the peg inserted in a hole and evaluate whether the peg has been turned over and inserted according to the request.

In the above-described embodiments, the step of providing the user with the game (S120) further includes providing a peg insertion point in order for the user to insert a peg at a distance sufficient for a range of motion (ROM) of the user to be extended in consideration of the ROM of the user.

In the present disclosure, the distance sufficient for the ROM to be extended refers to a distance limited within a normal ROM.

That is, the step of providing a peg insertion point in order for the user to insert a peg at a distance sufficient for the ROM to be extended is included in rehabilitation training of the user whose ROM cannot reach the normal ROM to extend the ROM to the normal ROM.

In the step of providing a peg insertion point in order for the user to insert a peg at a distance sufficient for the ROM to be extended according to the above-described embodiments, when a point for guiding the user to insert a peg is presented to the user whose ROM cannot reach the normal ROM, the peg insertion guiding point is placed gradually farther than the ROM.

In this case, desirably, the peg insertion guiding point placed gradually farther than the ROM is a middle point or an end point rather than a start point.

If the start point is placed farther than the ROM, the user may not even start the game. Therefore, the start point is placed within the ROM and the middle point or the end point is placed farther than the ROM. Thus, the ROM can be gradually extended as the user inserts pegs.

In the step of guiding the user to the evaluation of the game result (S160), when the user forms a route by inserting pegs, the result of evaluation is produced in consideration of a case where a peg is inserted farther than the ROM of the user, and the user is guided to the produced result of evaluation.

The pegboard training method according to an embodiment of the present disclosure further includes a step of providing a guide by the pegboard training device after recognizing whether a hand gripping a peg has been supposed to grip the peg.

Whether a hand gripping a peg has been supposed to grip the peg can be recognized based on mutual recognition between a finger wearable device worn on the user's finger and the peg.

The mutual recognition between the finger wearable device worn on the user's finger and the peg may use at least one of near field communication (NFC) or radio frequency identification (RFID), or may include mutual recognition between the finger wearable device including a magnet and a plurality of pegs each including a magnetic sensor.

In a case where at least one of near field communication (NFC) or radio frequency identification (RFID) is used, when a peg is inserted into a hole, the pegboard training device determines whether a touch between the finger wearable device and the peg has been recognized and deduces a result on whether the peg has been inserted by a hand wearing the finger wearable device and then provides the result to the user.

In a case where mutual recognition between the finger wearable device including a magnet and a plurality of pegs each including a magnetic sensor is used, when a peg is inserted into a hole, the pegboard training device deduces a result on whether the peg has been inserted by a hand wearing the finger wearable device depending on whether the magnetism has been sensed by the magnetic sensor of the peg and then provides the result to the user.

The mutual recognition between the plurality of pegs and the finger wearable device makes it possible to know which hand was used to insert a peg. Therefore, if a hand in need of training is not used, the pegboard training device can present the user to insert a peg with the hand in need of training.

The finger wearable device may include all devices, such as a glove or a ring, which can be worn on the finger.

The pegboard training method according to an embodiment of the present disclosure further includes a step of initial setting in a customized manner by the pegboard training device before the step of providing the user with the game (S120).

The step of initial setting is performed by calculating at least one of an approach range or an approach direction of the user's finger to a plurality of holes on the board.

That is, the user is requested to touch a hole on the board with his/her finger to diagnose the user's condition, and initial setting is performed according to the user's condition.

The initial setting is performed for patients with learned non-use who do not often use their affected arms. The current range or form of motion of a hand in need of rehabilitation is diagnosed to present a game suitable for training a part of learned non-use to insert a peg.

In the initial setting, the direction or distance between points presented in each of the above-described games can be customized for the user and the ROM can be diagnosed in advance. Therefore, it is possible to provide a game for gradually extending the ROM. In an embodiment, if the pegboard training device is configured including a main device and a replaceable board including a plurality of holes, a board used for calculating an approach range or an approach direction of the user's finger to a plurality of holes on the board in the initial setting may be smaller in thickness than a board used for executing a game.

To calculate the approach range or the approach direction of the user's finger to a plurality of holes on the board, a magnet may be attached to the user's finger or may be placed on the user's finger by wearing a glove. Then, when the user's finger with the magnet is located near a hole sensor, it can be recognized and a result value can be extracted.

Therefore, to sense the magnetism between the user's finger and the hole sensor, the board needs to be smaller in thickness than the board used for inserting pegs. If so, sensing can be accurate, and, thus, an accurate result value can be extracted.

The pegboard training method according to an embodiment of the present disclosure may further include a step of presenting, on an external display, the proceedings of the game performed on the board.

The external display may present the proceedings of the game performed on the board identically as shown on the board or may present a guide to execute a game, an operation for initial setting, a screen with various options and the like.

The external display may be combined as one body with the pegboard training device and thus cannot be separated from each other, or may be provided separately from the pegboard training device and thus can be separated from each other.

Further, the pegboard training device that provides the pegboard training method according to an embodiment of the present disclosure includes a bidirectional manipulation unit and a display unit and provides at least one of operations for pegboard training, a guide to a game, and an evaluation of a game result on the display unit.

The bidirectional manipulation unit may be provided separately from the display unit, or the display unit may also serve as the manipulation unit by touching the display unit.

The display unit includes a screen whose direction can be switched to two directions, and, thus, the direction of the screen can be switched to a direction of manipulation of the user as manipulated by the user. The direction of manipulation of the user is recognized according to a direction to which the user uses the bidirectional manipulation unit.

The presentation direction of the display unit can be switched according to the direction of manipulation of the user so that the user can use the pegboard training device without changing the direction of the pegboard training device at a position where the user uses the pegboard training device.

Further, two users can execute the game facing each other. A patient on one side and a rehabilitation trainer or caretaker on the other side may be located and the rehabilitation trainer or caretaker may select a game suitable for the patient and perform initial setting so that a game suitable for the patient's condition can be provided.

Hereinafter, various embodiments of a method for providing the above-described game to the user will be described with reference to the accompanying drawings.

**FIG. 2** and **FIG. 3** are diagrams for explaining a game method for training a patient with a visual field defect or a neglect patient.

The examples illustrated in **FIG. 2** and **FIG. 3** are provided to explain a game execution method for a patient with a defect on the left side of the visual field or a neglect patient who neglects the left side.

**FIG. 2** illustrates an example of a guide to insert pegs sequentially from a visible or recognizable point in the visual field of the user to an invisible or unrecognizable point in the opposite direction to the visible or recognizable point.

**FIG. 2A** to **FIG. 2D** sequentially guides the user to peg insertion points which are illustrated as hatched holes, respectively. However, the peg insertion points may be guided in various ways such as light output.

The user is guided to insert pegs sequentially from a rightmost hole 201 that is a visible or recognizable point in the visual field of the user to a leftmost hole 204 that is an invisible or unrecognizable point.

**FIG. 3** illustrates an example where a plurality of specific positions where pegs need to be inserted is presented at the same time to guide the user to insert a peg from an invisible region among all the peg insertion positions.

The pegboard training device presents all the plurality of specific positions to the user and requests the user to insert pegs sequentially from one of the plurality of specific positions that is on an invisible or unrecognizable region in the visual field of the user and is the farthest from a visible or recognizable region in the visual field of the user toward the visible region in the visual field of the user.

**FIG. 3A** illustrates that the plurality of specific positions is presented in a diagonal direction, and **FIG. 3B** illustrates that the plurality of specific positions is presented in a horizontal direction.

In **FIG. 3A** and **FIG. 3B****,** if the left side that is invisible or unrecognizable in the visual field of the user starts from holes 302 and 306 in the middle, leftmost holes 301 and 305 among all of the presented holes are located at specific positions farthest from a visible or recognizable region. Therefore, pegs needs to be inserted sequentially in the right direction from the leftmost holes 301 and 305 to rightmost holes 304 and 308.

If the user inserts pegs into middle holes 301, 302, 306 and 307 in the visible region or the invisible region, the pegboard training device guides the user that he/she needs to insert a peg into a hole in the more left region.

**FIG. 4** is a diagram for explaining a multipoint connection game method included in cognitive training according to an embodiment of the present disclosure.

Referring to **FIG. 4****,** the pegboard training device presents a plurality of points 411, 412 and 413 that needs to be connected to each other, as shown in **FIG. 4A****.**

If the plurality of points 411, 412 and 413 that needs to be connected to each other is presented as shown in **FIG. 4A****,** the user inserts pegs into holes including the plurality of points 411, 412 and 413 to connect the plurality of points 411, 412 and 413. The pegboard training device may restrict the sequence of inserting pegs, or the execution of the game may be completed as long as the plurality of points 411, 412 and 413 is connected to each other regardless of the sequence of inserting pegs.

**FIG. 4B** illustrates that the user inserts pegs into a plurality of holes to connect the plurality of points 411, 412 and 413 to each other, and it can be seen that pegs have been inserted in holes 411, 401, 402, 403, 412, 404, 405, 406, 407, 408 and 413.

In this case, a peg inserted in a hole 404 is inserted on a route irrelevant to a route connecting the plurality of points 411, 412 and 413, and, thus, the pegboard training device may request the user to correct the route.

When the user removes the peg inserted in the hole 404 in response to the request from the pegboard training device to correct the route, the execution of the game is completed.

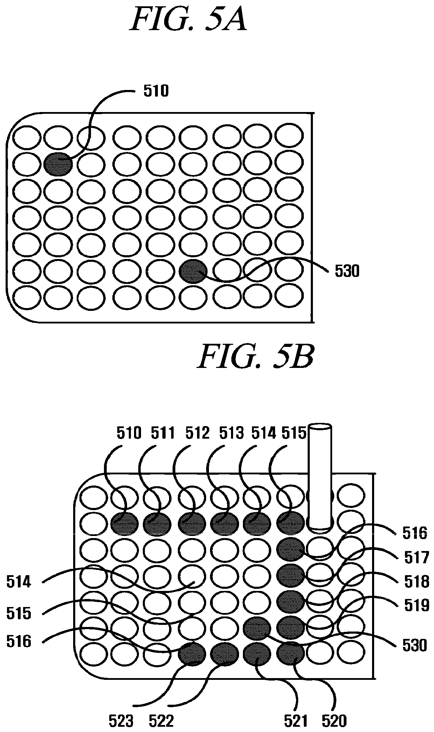

**FIG. 5** is a diagram for explaining a destination reaching game method included in cognitive training according to an embodiment of the present disclosure.

Referring to **FIG. 5A****,** the pegboard training device presents a hole 510 from which a first point starts to move and a hole 530 of a second point that is fixed.

The destination reaching game is over when the first point that is moving moves to reach the second position that is fixed.

The first point moves according to a predetermined rule, and if a movement route of the first point is blocked, the first point is rerouted to a predetermined direction and continues to move.

When the movement route of the first point is blocked, the first point may reach the end of the pegboard device or a point where a peg has been inserted.

**FIG. 5** illustrates an example where the first point moves according to a rule of moving to the right direction sequentially one by one, and if a movement route of the first point is blocked, the first point is set to be rerouted to the right direction and to continue to move.

Referring to **FIG. 5B****,** the first point starts to move to the right direction sequentially one by one from the hole 510 to holes 511, 512, 513, 514 and 515, and since a peg has been inserted in a hole on the right side of the hole 515, the movement route is blocked. Therefore, the first point is rerouted from the hole 515 to the right direction.

The first point that has been rerouted to the right direction moves again sequentially one by one to holes 516, 517, 518, 519 and 520, and since there is no more hole in the right direction at the end of the pegboard device, the movement route is blocked.

In this case, the first point is rerouted again to the right direction and continues to move sequentially one by one to holes 512, 522 and 523.

**FIG. 5B** illustrates that the first point has not yet reached the second point.

When the user uses a peg to reroute the movement direction of the first point and the first point reaches the second point 530 that is fixed, the execution of the game is completed.

The steps of a method or algorithm described in connection with the embodiments disclosed herein may be embodied directly in hardware, in a software module executed by hardware, or in a combination of the two. The software module may reside in RAM (Random Access Memory), ROM (Read Only Memory), EPROM (Erasable Programmable ROM), EEPROM (Electrically Erasable Programmable ROM), flash memory, hard disk, a removable disk, a CD-ROM, or any other form of computer-readable storage medium known in the art.

Although the exemplary embodiments of the present disclosure have been described with reference to the accompanying drawings, it would be understood by a person with ordinary skill in the art that various changes and modifications may be made without changing technical conception and essential features of the present disclosure. The scope of the present invention is defined in the appended claims.

## Claims

1. A pegboard training method, comprising:
performing initial setting based on a condition of a user for providing customized training by a pegboard training device;
receiving a game execution request from the user by the pegboard training device;
providing the user with a game for which the execution request has been received by the pegboard training device;
recognizing the user's insertion of a peg for the game by the pegboard training device; and
guiding the user to an evaluation of a game result based on the insertion of the peg recognized by the pegboard training device after the game is over,
wherein the pegboard training device is configured to provide the user with training by using insertion pegs onto a board including a plurality of holes, and
the game is executed by at least one of inserting a peg into at least one hole presented by the pegboard training device on the pegboard, inserting a peg by the user into a hole, which has not been presented by the pegboard training device, on the pegboard at the user's discretion, and removing a peg inserted in a hole by the user after the pegboard training device guides the user to remove the peg,
wherein the providing the user with the game includes:
presenting all of a plurality of specific positions by the pegboard training device;
requesting, by the pegboard training device, the user to insert pegs sequentially from one of the plurality of specific positions that is the farthest from a second region of the plurality of specific positions in a first region of the plurality of specific positions toward the second region; and
if a position where the insertion of a peg has been recognized by the pegboard device is closer to the second region than to the one of the plurality of specific positions, guiding the user that there is a position where a peg needs to be inserted in the first region; and
wherein the initial setting includes setting a direction of from the first region corresponding to the one side toward the second region in the opposite direction to the first region in consideration of the one side of the user who neglects the one side or the user with a defect on the one side,
wherein the pegs include magnets having different intensities and are color-coded for each magnetic intensity, and
wherein recognizing the user's insertion of the peg includes:
evaluating whether the peg to be inserted has been inserted correctly based on magnetic intensity recognized by a hole in which the peg has been inserted.

2. The pegboard training method of Claim 1,
wherein the providing the user with the game further includes:
presenting a plurality of points to the user by the pegboard training device, and
requesting the user to insert pegs into a plurality of holes on a route connecting the plurality of points by the pegboard training device.

3. The pegboard training method of Claim 2,
wherein in the guiding the user to the evaluation of the game result,
guiding the user the evaluation based on at least one of the presence or absence of the shortest distance route, the number of pegs inserted, the level of difficulty and the game execution time.

4. The pegboard training method of Claim 2,
wherein the guiding the user to the evaluation of the game result includes, if there are more than one route connecting the plurality of points formed by the user, requesting the user to correct the route.

5. The pegboard training method of Claim 1,
wherein the providing the user with the game further includes:
presenting a first point that is moving and a second point that is fixed, and
when the first point moves to reach the second position, the game is over,
the first point moves according to a predetermined rule, and if a movement route of the first point is blocked, the first point is rerouted to a predetermined direction and continues to move, and
when the movement route of the first point is blocked, the first point reaches the end of the pegboard device or a point where a peg has been inserted.

6. The pegboard training method of Claim 5,
wherein in the guiding the user to the evaluation of the game result,
guiding the user the evaluation based on at least one of the game execution time, the success or failure in the game, the number of pegs used and the number of holes along which the first point moves.

7. The pegboard training method of Claim 1,
wherein the providing the user with the game further includes;
providing a specific shape such that pegs are inserted along the specific shape by the user.

8. The pegboard training method of Claim 7,
wherein the specific shape is at least one of the shape of a pattern formed directly by the user by selecting a plurality of holes and a shape selected by the user from among predetermined shapes.

9. The pegboard training method of Claim 1,
wherein the pegs include bipolar magnets and whose both ends are differentiated.

10. The pegboard training method of any one of Claim 1 to Claim 9,
wherein the providing the user with the game further includes:
providing a peg insertion point in order to insert a peg at a distance sufficient for a range of motion (ROM) of the user to be extended in consideration of the ROM of the user.

11. The pegboard training method of Claim 1, further comprising:
providing a guide by the pegboard training device by recognizing whether a hand gripping a peg has been supposed to grip the peg,
wherein whether a hand gripping a peg has been supposed to grip the peg is recognized based on mutual recognition between a finger wearable device worn on the user's finger and the peg.

12. The pegboard training method of Claim 1, further comprising:
wherein the initial setting is performed by calculating at least one of an approach range or an approach direction of the user's finger to a plurality of holes on the board.

13. The pegboard training method of Claim 1, further comprising:
presenting, on an external display, the proceedings of the game performed on the board identically as shown on the board,
wherein the external display is combined as one body with the pegboard training device or provided separately from the pegboard training device and is separable from each other.

14. The pegboard training method of Claim 1,
wherein the pegboard training device includes a bidirectional manipulation unit and a display unit and provides at least one of operations for pegboard training, setting, a guide to a game, and an evaluation of a game result on the display unit,
the display unit includes a screen whose direction is switched to two directions, and, the direction of the screen is switched to a direction of manipulation of the user as manipulated by the user, and
the direction of manipulation of the user is recognized according to a direction to which the user uses the bidirectional manipulation unit.

15. A computer-readable medium comprising instructions which, when executed by a pegboard training device, cause the pegboard training device to carry out the method of any one of claims 1 to 14.

## Patentansprüche

1. Stecktafeltrainingsverfahren, umfassend:
Durchführen von Anfangseinstellungen auf der Grundlage eines Zustands eines Benutzers für das Bereitstellen eines benutzerangepassten Trainings durch eine Stecktafel-Trainingsvorrichtung;
Empfangen einer Spielausführungsanforderung vom Benutzer durch die Stecktafel-Trainingsvorrichtung;
Bereitstellen eines Spiels für den Benutzer, für das die Ausführungsanforderung empfangen wurde, von der Stecktafel-Trainingsvorrichtung;
Erkennen des Einsetzens eines Stifts für das Spiel durch den Benutzer durch die Stecktafel-Trainingsvorrichtung; und
Anleiten des Benutzers zu einer Bewertung eines Spielergebnisses auf Grundlage des Einsetzens des von der Stecktafel-Trainingsvorrichtung erkannten Stifts, nachdem das Spiel vorüber ist,
wobei die Stecktafel-Trainingsvorrichtung so konfiguriert ist, dass sie dem Benutzer ein Training unter Verwendung von Steckstiften an einer Tafel, die eine Vielzahl von Löchern aufweist, bereitstellt, und
das Spiel durch mindestens eines von einem Einsetzen eines Stifts in mindestens ein Loch, das von der Stecktafel-Trainingsvorrichtung präsentiert wird, an der Stecktafel, einem Einsetzen eines Stifts durch den Benutzer in ein Loch, das nicht von der Stecktafel-Trainingsvorrichtung präsentiert wurde, an der Stecktafel nach Ermessen des Benutzers, und einem Entfernen eines Stifts umfasst, der von dem Benutzer in ein Loch eingesetzt wurde, nachdem die Stecktafel-Trainingsvorrichtung den Benutzer zum Entfernen des Stifts angeleitet hat,
wobei das Bereitstellen des Spiels für den Benutzer umfasst:
Präsentieren aller einer Vielzahl von spezifischen Positionen durch die Stecktafel-Trainingsvorrichtung;
Auffordern des Benutzers durch die Stecktafel-Trainingsvorrichtung, nacheinander Stifte von einer der Vielzahl spezifischer Positionen, die am weitesten von einem zweiten Bereich der Vielzahl spezifischer Positionen entfernt sind, in einem ersten Bereich der Vielzahl spezifischer Positionen in Richtung des zweiten Bereichs einzusetzen; und
wenn eine Position, an der das Einsetzen eines Stifts von der Stecktafelvorrichtung erkannt wurde, näher an dem zweiten Bereich liegt als an der einen der Vielzahl spezifischer Positionen, Anleiten des Benutzers, dass es eine Position gibt, an der ein Stift in den ersten Bereich eingesetzt werden muss; und
wobei die anfängliche Einstellung ein Einstellen einer Richtung von dem ersten Bereich, der der einen Seite entspricht, zu dem zweiten Bereich in der entgegengesetzten Richtung zu dem ersten Bereich unter Berücksichtigung der einen Seite des Benutzers, der die eine Seite vernachlässigt, oder des Benutzers mit einem Defekt an der einen Seite umfasst,
wobei die Stifte Magnete mit unterschiedlichen Stärken enthalten und für jede magnetische Stärke farbcodiert sind, und
wobei das Erkennen des Einsetzens des Stifts durch den Benutzer umfasst: Bewerten, ob der einzusetzende Stift korrekt eingesetzt wurde, anhand der magnetischen Intensität, die von einem Loch erkannt wird, in das der Stift eingesetzt wurde.

2. Stecktafeltrainingsverfahren nach Anspruch 1,
wobei das Bereitstellen des Spiels für den Benutzer weiterhin umfasst:
Präsentieren einer Vielzahl von Punkten für den Benutzer durch die Stecktafel-Trainingsvorrichtung, und
Auffordern des Benutzers, Stifte in eine Vielzahl von Löchern an einer Route einzusetzen, die die Vielzahl von Punkten verbindet, durch die Stecktafel-Trainingsvorrichtung.

3. Stecktafeltrainingsverfahren nach Anspruch 2,
wobei beim Anleiten des Benutzers zur Bewertung des Spielergebnisses das Anleiten des Benutzers zur Bewertung auf der Grundlage von mindestens einem aus einem Vorhandensein oder Fehlen der Route der kürzesten Distanz, der Anzahl der eingesetzten Stifte, dem Schwierigkeitsgrad und der Ausführungsdauer des Spiels erfolgt.

4. Stecktafeltrainingsverfahren nach Anspruch 2,
wobei das Anleiten des Benutzers zur Bewertung des Spielergebnisses umfasst, dass der Benutzer aufgefordert wird, die Route zu korrigieren, wenn es mehr als eine Route gibt, die die Vielzahl der vom Benutzer gebildeten Punkte verbindet.

5. Stecktafeltrainingsverfahren nach Anspruch 1,
wobei das Bereitstellen des Spiels für den Benutzer weiterhin umfasst, dass:
ein erster Punkt, der sich bewegt, und ein zweiter Punkt, der fixiert ist, präsentiert werden, und
wenn sich der erste Punkt bewegt, um die zweite Position zu erreichen, das Spiel vorbei ist,
sich der erste Punkt gemäß einer vorbestimmten Regel bewegt, und wenn eine Bewegungsroute des ersten Punktes blockiert ist, der erste Punkt in eine vorbestimmte Richtung umgeleitet wird und sich weiter bewegt, und wenn die Bewegungsroute des ersten Punktes blockiert ist, der erste Punkt das Ende der Stecktafelvorrichtung oder einen Punkt erreicht, an dem ein Stift eingesetzt wurde.

6. Stecktafeltrainingsverfahren nach Anspruch 5,
wobei beim Anleiten des Benutzers zur Bewertung des Spielergebnisses das Anleiten des Benutzers zur Bewertung auf mindestens einem der Dauer der Spielausführung, dem Erfolg oder Misserfolg im Spiel, der Anzahl der verwendeten Stifte und der Anzahl der Löcher, entlang denen sich der erste Punkt bewegt, erfolgt.

7. Stecktafeltrainingsverfahren nach Anspruch 1,
wobei das Bereitstellen des Spiels für den Benutzer weiterhin umfasst; Bereitstellen einer spezifischen Formgebung, so dass die Stifte vom Benutzer entlang der spezifischen Formgebung eingesetzt werden.

8. Stecktafeltrainingsverfahren nach Anspruch 7,
wobei die spezifische Formgebung mindestens eine von der Formgebung eines Musters, das direkt vom Benutzer durch Auswahl einer Vielzahl von Löchern gebildet wird, und einer vom Benutzer aus vorbestimmten Formgebungen ausgewählten Formgebung ist.

9. Stecktafeltrainingsverfahren nach Anspruch 1,
wobei die Stifte bipolare Magnete enthalten und deren beide Enden differenziert sind.

10. Stecktafeltrainingsverfahren nach einem der Ansprüche 1 bis 9,
wobei das Bereitstellen des Spiels für den Benutzer weiterhin umfasst:
Bereitstellen eines Stifteinsetzpunktes, um einen Stift in einer Distanz einzusetzen, der ausreicht, um einen Bewegungsbereich (ROM) des Benutzers unter Berücksichtigung des ROM des Benutzers zu erweitern.

11. Stecktafeltrainingsverfahren nach Anspruch 1, ferner umfassend:
Bereitstellen einer Anleitung durch die Stecktafel-Trainingsvorrichtung durch Erkennen, ob eine nach einem Stift greifende Hand den Stift auch ergreifen kann,
wobei auf der Grundlage einer gegenseitigen Erkennung zwischen einer am Finger tragbaren Vorrichtung, die am Finger des Benutzers getragen wird,
und dem Stift erkannt wird, ob eine nach einem Stift greifende Hand den Stift auch ergreifen kann.

12. Stecktafeltrainingsverfahren nach Anspruch 1, ferner umfassend:
wobei die anfängliche Einstellung durch Berechnen mindestens eines aus einem Annäherungsbereich oder einer Annäherungsrichtung des Fingers des Benutzers an eine Vielzahl von Löchern an der Tafel durchgeführt wird.

13. Stecktafeltrainingsverfahren nach Anspruch 1, ferner umfassend:
Präsentieren der Abläufe des an der Tafel durchgeführten Spiels auf einer externen Anzeige in der gleichen Weise wie auf der Tafel,
wobei die externe Anzeige als ein Körper mit der Stecktafel-Trainingsvorrichtung kombiniert ist oder getrennt von der Stecktafel-Trainingsvorrichtung bereitgestellt wird und voneinander trennbar ist.

14. Stecktafeltrainingsverfahren nach Anspruch 1,
wobei die Stecktafel-Trainingsvorrichtung eine bidirektionale Manipulationseinheit und eine Anzeigeeinheit umfasst und mindestens eine der Operationen für das Stecktafel-Training, die Einstellung, eine Anleitung zu einem Spiel und eine Bewertung eines Spielergebnisses an der Anzeigeeinheit bereitstellt,
die Anzeigeeinheit einen Bildschirm umfasst, dessen Richtung in zwei Richtungen geschaltet wird, und die Richtung des Bildschirms auf eine Richtung der Manipulation des Benutzers geschaltet wird, wie sie von dem Benutzer manipuliert wird, und
die Manipulationsrichtung des Benutzers entsprechend einer Richtung erkannt wird, in der der Benutzer die bidirektionale Manipulationseinheit benutzt.

15. Computerlesbares Medium, das Anweisungen enthält, die, wenn sie von einer Stecktafel-Trainingsvorrichtung ausgeführt werden, die Stecktafel-Trainingsvorrichtung veranlassen, das Verfahren nach einem der Ansprüche 1 bis 14 auszuführen.

## Revendications

1. Procédé d'entraînement de Pegboard, comprenant les étapes consistant à :
effectuer un placement initial sur la base d'une condition d'un utilisateur pour fournir un entraînement personnalisé au moyen d'un dispositif d'entraînement de Pegboard ;
recevoir une demande d'exécution de jeu depuis l'utilisateur via le dispositif d'entraînement de Pegboard ;
fournir une partie à l'utilisateur pour laquelle la demande d'exécution a été reçue par le dispositif d'entraînement de Pegboard ;
reconnaître l'insertion par l'utilisateur d'une cheville pour la partie via le dispositif d'entraînement de Pegboard ; et
guider l'utilisateur vers une évaluation d'un résultat de la partie sur la base de l'insertion de la cheville reconnue par le dispositif d'entraînement de Pegboard une fois la partie terminée,
dans lequel le dispositif d'entraînement de Pegboard est configuré pour fournir un entraînement à l'utilisateur en utilisant des chevilles d'insertion jusque sur un panneau incluant une pluralité de trous, et
la partie est exécutée en réalisant au moins une opération parmi : insérer une cheville dans au moins un trou présenté par le dispositif d'entraînement de Pegboard sur le Pegboard, insérer une cheville par l'utilisateur dans un trou, qui n'a pas été présenté par le dispositif d'entraînement de Pegboard,
sur le Pegboard à la discrétion de l'utilisateur, et enlever une cheville insérée dans un trou par l'utilisateur après que le dispositif d'entraînement de Pegboard guide l'utilisateur pour enlever la cheville,
dans lequel l'étape consistant à fournir la partie à l'utilisateur inclut :
de présenter la totalité d'une pluralité de positions spécifiques via le dispositif d'entraînement de Pegboard ;
de demander, via le dispositif d'entraînement de Pegboard, à l'utilisateur d'insérer des chevilles de manière séquentielle depuis l'une de la pluralité de positions spécifiques qui est la plus éloignée d'une seconde région de la pluralité de positions spécifiques dans une première région de la pluralité de positions spécifiques vers la seconde région ; et
si une position où l'insertion d'une cheville a été reconnue par le dispositif de Pegboard est plus proche de la seconde région que de ladite une de la pluralité de positions spécifiques, de guider l'utilisateur comme quoi il y a une position où une cheville doit être insérée dans la première région ; et
dans lequel l'étape de placement initial inclut de fixer une direction allant depuis la première région correspondant audit un côté vers la seconde région dans la direction opposée à la première région en tenant compte dudit un côté de l'utilisateur qui néglige ledit un côté ou de l'utilisateur avec un défaut sur ledit un côté,
dans lequel les chevilles incluent des aimants ayant des intensités différentes et ayant des codes couleurs pour chaque intensité magnétique, et
dans lequel l'étape consistant à reconnaître l'insertion par l'utilisateur de la cheville inclut :
d'évaluer si la cheville à insérer a été insérée correctement sur la base d'une intensité magnétique reconnue par un trou dans lequel la cheville a été insérée.

2. Procédé d'entraînement de Pegboard selon la revendication 1,
dans lequel l'étape consistant à fournir la partie à l'utilisateur inclut :
de présenter une pluralité de points à l'utilisateur via le dispositif d'entraînement de Pegboard, et
de demander à l'utilisateur d'insérer des chevilles dans une pluralité de trous sur un itinéraire connectant la pluralité de points via le dispositif d'entraînement de Pegboard.

3. Procédé d'entraînement de Pegboard selon la revendication 2,
dans lequel l'étape consistant à guider l'utilisateur vers l'évaluation du résultat de la partie inclut de :
guider l'utilisateur vers l'évaluation sur la base d'au moins un élément parmi la présence ou l'absence de l'itinéraire de distance la plus courte, le nombre de chevilles insérées, le niveau de difficulté et la durée d'exécution de la partie.

4. Dispositif d'entraînement de Pegboard selon la revendication 2,
dans lequel le guidage de l'utilisateur vers l'évaluation du résultat de jeu inclut, s'il y a plus d'un itinéraire connectant la pluralité de points formés par l'utilisateur, de demander à l'utilisateur de corriger l'itinéraire.

5. Dispositif d'entraînement de Pegboard selon la revendication 1,
dans lequel l'étape consistant à fournir la partie à l'utilisateur inclut :
de présenter un premier point qui est mobile et un second point qui est fixe, et
quand le premier point se déplace pour atteindre la seconde position, la partie est terminée,
le premier point se déplace en accord avec une règle prédéterminée, et si un itinéraire de déplacement du premier point est bloqué, le premier point est redirigé vers une direction prédéterminée et continue à se déplacer, et
quand l'itinéraire de déplacement du premier point est bloqué, le premier point atteint la fin du dispositif de Pegboard ou un point où une cheville a été insérée.

6. Procédé d'entraînement de Pegboard selon la revendication 5,
dans lequel l'étape consistant à guider l'utilisateur vers l'évaluation du résultat de la partie inclut de :
guider l'utilisateur vers l'évaluation sur la base d'au moins un élément parmi la durée d'exécution de la partie, la réussite ou l'échec dans la partie, le nombre de chevilles utilisées et le nombre de trous le long desquels le premier point se déplace.

7. Procédé d'entraînement de Pegboard selon la revendication 1,
dans lequel l'étape consistant à fournir la partie à l'utilisateur inclut en outre :
de fournir une forme spécifique de telle sorte que des chevilles sont insérées le long de la forme spécifique par l'utilisateur.

8. Procédé d'entraînement de Pegboard selon la revendication 7,
dans lequel la forme spécifique est l'une au moins de la forme d'un motif formé directement par l'utilisateur en sélectionnant une pluralité de trous et d'une forme sélectionnée par l'utilisateur parmi des formes prédéterminées.

9. Procédé d'entraînement de Pegboard selon la revendication 1,
dans lequel les chevilles incluent des aimants bipolaires et dont les deux extrémités sont différenciées.

10. Procédé entraînement de Pegboard selon l'une quelconque des revendications 1 à 9,
dans lequel l'étape consistant à fournir la partie à l'utilisateur inclut en outre :
de fournir un point d'insertion de cheville afin d'insérer une cheville à une distance suffisante pour qu'une plage de mouvement de l'utilisateur soit étendue en tenant compte de la plage de mouvement de l'utilisateur.

11. Procédé d'entraînement de Pegboard selon la revendication 1, comprenant en outre l'étape consistant à :
fournir un guide par le dispositif d'entraînement de Pegboard en reconnaissant si une main saisissant une cheville est supposée avoir saisi la cheville,
dans lequel le fait qu'une main saisissant une cheville est supposée avoir saisi la cheville est reconnu sur la base d'une reconnaissance mutuelle entre un dispositif portable de doigt porté par un doigt de l'utilisateur et la cheville.

12. Procédé d'entraînement de Pegboard selon la revendication 1, comprenant en outre :
le fait que l'étape de placement initial est effectuée en calculant l'une au moins d'une plage d'approche ou d'une direction d'approche du doigt de l'utilisateur jusqu'à une pluralité de trous sur le panneau.

13. Procédé d'entraînement de Pegboard selon la revendication 1, comprenant en outre :
de présenter, sur un affichage externe, l'avancée de la partie à l'identique de ce qui est montré sur le panneau,
dans lequel l'affichage externe est combiné en tant qu'une seule entité avec le dispositif d'entraînement de Pegboard ou est fourni séparément du dispositif d'entraînement de Pegboard et peut en être séparé.

14. Procédé d'entraînement de Pegboard selon la revendication 1,
dans lequel le dispositif d'entraînement de Pegboard inclut une unité de manipulation bidirectionnelle et une unité d'affichage, et fournit au moins une opération parmi un entraînement de Pegboard, un placement, un guide vers une partie, et une évaluation d'un résultat de la partie sur l'unité d'affichage,
l'unité d'affichage inclut un écran dont la direction est commutée vers deux directions, et la direction de l'écran est commutée vers une direction de manipulation de l'utilisateur lors d'une manipulation de l'utilisateur, et
la direction de manipulation de l'utilisateur est reconnue en accord avec une direction vers laquelle l'utilisateur utilise l'unité de manipulation bidirectionnelle.

15. Support lisible par ordinateur comprenant des instructions qui, quand elles sont exécutées par un dispositif d'entraînement de Pegboard, amènent le dispositif d'entraînement de Pegboard à mettre en oeuvre le procédé selon l'une quelconque des revendications 1 à 14.
